(19) Europäisches Patentamt
European Patent Office
Office européen des brevets

(11) Publication number : 0 341 445 B1

(12) # EUROPEAN PATENT SPECIFICATION

(45) Date of publication of patent specification : 22.07.92 Bulletin 92/30

(51) Int. Cl.$^5$ : G01P 3/489

(21) Application number : 89106713.4

(22) Date of filing : 14.04.89

(54) **Method of and apparatus for measuring revolution speed.**

(30) Priority : 15.04.88 JP 94238/88

(43) Date of publication of application : 15.11.89 Bulletin 89/46

(45) Publication of the grant of the patent : 22.07.92 Bulletin 92/30

(84) Designated Contracting States : DE GB

(56) References cited :
EP-A- 0 090 717
US-A- 4 811 232
PATENT ABSTRACTS OF JAPAN, vol. 6, no. 233 (P-156)[1111], 19th November 1982; & JP-A-57 135 362 (NISSAN JIDOSHA K.K.)20-08-1982

(73) Proprietor : SUMITOMO ELECTRIC INDUSTRIES, LTD.
5-33, Kitahama 4-chome, Chuo-ku
Osaka-shi, Osaka 541 (JP)

(72) Inventor : Takata, Koji c/o Itami Works
Sumitomo Electric Ind., Ltd. 1-1, Koyakita 1-chome
Itami-shi Hyogo (JP)
Inventor : Matsumoto, Tatsuji c/o Itami Works
Sumitomo Electric Ind., Ltd. 1-1, Koyakita 1-chome
Itami-shi Hyogo (JP)

(74) Representative : Ritter und Edler von Fischern, Bernhard,Dipl.-Ing. et al
HOFFMANN - EITLE & PARTNER
Arabellastrasse 4
W-8000 München 81 (DE)

EP 0 341 445 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

The present invention relates to a method of and an apparatus for measuring revolution speed, which is adapted to generate pulse signals at an interval in inverse proportion to the revolution speed of a rotary member and to calculate the revolution speed of the rotary member from the spacing of the pulse signals thus generated.

Although it has been known to calculate the revolution speed of the rotary member either from the number of the pulses within a unit time, or from the pulse spacing, errors of the calculation for the revolution speed of the rotary member become larger at either low speed or high speed in each case. Therefore, a method is known of using the number of the pulses N within a unit operation period TM, and a lapse time T between the lead pulse of a unit operation period and the lead pulse of the previous unit operation period or between the pair of final pulses, the revolution speed V being given as follows.

$$V = 2\pi RN/ZT = \alpha N/T$$

wherein the radius of the rotary member is R, the number of pulses generated per revolution is Z.

Fig. 4 is a chart showing a relationship among a unit operation period TM, a lapse time T, and a number of pulses N. As a varying lapse time T like T1 through T4 is used in accordance with the pulse detection timing, instead of the fixed operation period TM, this method improves the operational accuracy. However, when the revolution speed becomes extremely low, the number N of the pulses to be fed into the unit operation period TM becomes zero (N = 0) and under such a condition it becomes impossible to carry out the subsequent operation.

In order to remove such an inconvenience, there is proposed a system of obtaining the estimated value of the revolution speed for such a unit operation period as N = 0, so that the operation of the system may be effected without hindrance (for example, see Japanese Laid-open Patent Application Tokkaisho No. 62-241755). The above proposal is to estimate the speed for N = 0 period from the revolution speed and the acceleration obtained for the previous period. A measured speed is obtained when a pulse has been detected in the next period, while an acceleration for this period is estimated from the estimated speed for previous period and the measured speed for this period. Also, when the acceleration for the previous period is positive, it is assumed to be zero (0) at the estimation of the speed for N = 0 period.

In the system disclosed above, the estimated value of the speed for N = 0 period is obtained by the use of the speed estimated during the previous period. When at least two of the N = 0 periods continue, the estimation errors are added one after another, so that it is ample is possibility that the operation results become considerably out of the actual speed. Also, the speed curve connecting the measured speed with the estimated speed may lack its smoothness. Especially, the acceleration, a differentiated value of speed, becomes extremely erroneous. Furthermore, it cannot be applied for the acceleration phase as it is aimed only for the deceleration phase.

### SUMMARY OF THE INVENTION

Accordingly, an object of the present invention is to provide a method of an an apparatus for measuring revolution speed, wherein the accuracy of the estimation of the speed for a unit operation period when pulses have not been detected is higher and the speed curve obtained is smoother. It may also be applicable to both of the deceleration and the acceleration phases.

EP-A-0 090 717 describes a speed measuring system in which the movement of a member is converted into regular pulses. By counting the number of pulses in a predetermined time interval the speed of the member can be calculated. If the speed is very low there will be at least one period when no pulses are detected. In this case, the system waits for the next pulse and determines the elapsed time between the newly detected pulse and the last detected pulse. The speed can then be estimated from the elapsed time.

The object of the invention is solved by a method of measuring revolution speed comprising the steps of detecting pulse signals generated at an interval in inverse proportion to the revolution speed of a rotary member, calculating the revolution speed of the rotary member for each unit operation period from the number of pulses within a fixed unit operation period, the lapse time between the leading pulse of current unit operation period and the leading pulse of previous operation period or between the final pulses of each operation periods,

whereby for the case when pulse signals have not been detected in a previous unit operation period or a plurality of continuous unit operation periods but the pulse signals are detected in the current unit operation period following such no-pulse unit operation periods,

a) calculating revolution speed for said current unit operation period by the use of the lapsed time from the detection time of the last pulse signal to the detection time of the pulse signal in the current unit operation period, **characterised by,** b) calculating the acceleration for the current unit operation period by the use of the revolution speed for the operation in the current unit operation period, the revolution speed calculated for the unit operation period in which the last pulse signal has been detected, and the lapse time between these periods, and for the case when no pulse signal is detected within a certain unit operation period,

c) obtaining both a first estimated value of the revolution speed for the current unit operation period from the revolution speed and the acceleration calculated for the previous unit operation period in which a pulse was detected provided the number of previous unit operation periods without a pulse is less than a predetermined value and a second estimated value assuming that one pulse occurs in the current unit operation period by employing the lapsed time which is a time from the detection time of the last pulse signal to the completion time of the current unit operation period, and

d) selecting the smaller value of the above two estimated values to be designated as the revolution speed for the current unit operation period.

The objects of the invention are also solved by an apparatus for measuring revolution speed comprising a pulse generating means for generating pulse signals at an interval in inverse proportion to the revolution speed of a revolution member, an operation means for detecting pulse signals from the pulse generating means, calculating the revolution speed of the rotary member for each unit operation period from the pulse number within a unit operation period and the lapse time between the leading pulse of the unit operation period and that of previous unit operation period or between each final pulse thereof, whereby for the case when pulse signals are detected in the next current unit operation period following no-pulse unit operation periods, said operation means,

a) calculates the revolution speed for the current unit operation period by the use of the lapse time from the detecting time of the last pulse signal to the detection time of the pulse signal in the current unit operation period, **characterised by:**

b) said operation means calculating the acceleration for the current unit operation period by the use of the revolution speed for the current unit operation period, the revolution speed calculated for the unit operation period in which the last pulse signal has been detected, and the lapse time between these periods,

and for the case when no pulses are detected within a certain unit operation period, said operation means

c) obtains one estimated value of the revolution speed for the current unit operation period from the revolution speed and the acceleration calculated for the previous unit operation period in which a pulse was detected;

d) obtains another estimated value of the revolution speed by assuming that the pulse number be 1 in the current unit operation period by using the lapsed time from the detection time of the last pulse signal to the completion time of the current unit operation period, and

e) adopts the smaller one through the comparison of these two estimated values as the revolution speed for the current unit operation period.

According to the invention in a case where pulse signals are not detected during one unit operation period or a plurality of continuous unit operation periods, and pulse signals are detected during the next current unit operation period, the revolution speed calculated during the previous unit operation period is ignored and the revolution speed for the current unit operation period is calculated by the use of the lapse time from the detection time of the last pulse signal to the detection time of the pulse signal during the current unit operation period, and also, the acceleration for the current unit operation period is calculated by the use of the revolution speed for the current unit operation period, the revolution speed calculated for the unit operation period in which the last pulse signal has been detected, and the lapse time between these pulses.

According to the invention, the latter estimated value of the revolution speed obtained from the lapse time between the detection time of the last pulse signal and the completion time of the current unit operation period is the maximum possible revolution speed, which is obtained if a pulse is actually detected at the end of the current unit operation period. Besides, as this estimation is effected not on the basis of the result of calculation for the previous period, which is inevitably an estimated value if the period is a no-pulse period, but on the basis of the last pulse signal actually detected, the estimation errors are not added up one after another when the no-pulse period continues. Because the smaller one is selected as the revolution speed for the no-pulse period through the comparison between the maximum possible estimated value and the estimated value of the revolution speed obtained from the extension of the operation result for the previous unit operation period, a value of higher estimation precision is obtained than in the case where an estimated revolution speed obtained from the extension of the operation result for the previous unit operation period is directly assumed as the revolution speed.

Also, in the method of and apparatus for measuring operation of the invention in the case where pulse signals are detected after the no-pulse period, the revolution speed and the acceleration are calculated in accordance with the last pulse signal actually detected and the pulse signal currently detected, a higher precision value closer to the actual speed is calculated as the revolution speed and the acceleration, so that the estimation errors are not added one after another even if the non-pulse period continues.

## BRIEF DESCRIPTION OF THE DRAWINGS

These and other objects and features of the present invention will become apparent from the following description taken in conjunction with preferred embodiments thereof with reference to the accompanying drawings, throughout which like parts are designated by like reference numerals, and in which:

Fig. 1 is a schematic block diagram of an apparatus in one embodiment of the present invention;

Fig. 2 is a wave form chart for illustrating the operation;

Fig. 3 is a flow chart showing the operation procedure; and

Fig. 4 is a view for illustrating the general revolution speed measuring method.

## DETAILED DESCRIPTION OF THE PREFERRED EMBODIMENTS

Before the description of the present invention proceeds, it is to be noted that like parts are designated by like reference numerals through the accompanying drawings.

Referring now to the drawings, there is shown in Fig. 1, a schematic block diagram of an apparatus according to one preferred embodiment of the present invention, which includes a pulse generating means 1 for generating pulse signals at an interval in inverse proportion to the revolution speed of a rotary member 11, and an operation means 2 for effecting various types of operations. The pulse generating means 1 is, for example, composed of a plurality of magnets disposed at equal intervals on the outer periphery of the rotary member 11, and an electromagnetic pick up 13 disposed close to them. The operation means 2 is composed of a counter 22, a timer 23 for counter use, a reference timer 24 for time use, and so on, as well as a CPU 21 as a center, with a memory 25 for storing the various types of data being provided in a CPU 21.

Fig. 2 is a wave-form chart for illustrating the operation, which includes pulse signals 31, an actual revolution speed curve 32 of the rotary member 11, a revolution speed curve 33 obtained by the operation. In the chart, reference character N is a number of the pulses detected during an individual unit operation period TM, reference character P is a number of the continuations of no-pulse unit operation period, reference character T is a pulse interval or a lapse time, reference character t is a time, reference character to is a completion time of the individual unit operation period, reference character t1 is a final pulse detection time during current unit operation period, and reference character t2 shows a final pulse detection time during the unit operation period in which a last pulse has been detected. Also, reference characters n1, n2, ... show the numbers of the unit operation periods for illustration use.

Fig. 2 shows an example in a case where the pulse signal 31 is detected at such timing as shown during a deceleration phase. The operation will be described hereinafter with reference to the flow chart of Fig. 3, wherein V is a revolution speed to be obtained for the current period, Vc is a revolution speed obtained for the previous period, A is an acceleration, $\alpha(=2\pi R/Z)$ is a constant to be obtained from the radius R of the rotary member 11 and the number of pulses Z during one rotation of the rotary member 11, P is a continuation number counting the successive periods in which no pulses has been detected, and PM is the maximum value allowed for P at which the estimation operation is closed assuming the rotary member 11 should be at a standstill. The value PM is set in advance, for example, as 8.

The operation is adapted to be effected at the completion time to of the respective unit operation period TM. The pulse number N during the period and the final pulse detection time t1 are read every time the respective unit operation period TM passes. When the detected number of pulses N is not equal 0, it is judged whether or not P is smaller than PM ($P<PM$). If $P<PM$, for example, as shown in the unit operation period n2, the program moves to step S1 and the speed V is calculated by the following equation.

$$V = \frac{\alpha N}{t1-t2} \quad (1)$$

In the case of the operation period n2, the actual pulse detection time is used for both t1 and t2, because the pulse signal is also detected during the previous operation period n1. When Vc = 0 is not satisfied, the program moves to the step S2 and the acceleration A is calculated by the following equation.

$$A = \frac{V-Vc}{(P+1)TM} \quad (2)$$

However, if Vc = 0, A is assumed as 0. The data are renewed like t2←t1, P←0, Vc←V for the operation in the next unit operation period.

It is to be noted that the operation t2←t1 is not executed at the no-pulse operation period as described later. Therefore, if the previous period has no-pulse, the detection time of the last pulse remains at t2 and the lapse time T from the detection time of the last pulse t2 to the detection time t1 in the current operation period is used as the t1←t2 in equation (1). See operation period n4 or n6 of the illustrated example Fig. 2.

Also, when N = 0 is not satisfied, and $P<PM$ is neither satisfied (namely, P = PM), it is assumed that a movement is just beginning after some periods of complete stop. In this case, V is assumed as 0 at the step S3 and A is also assumed as 0 at the step S4, with the data being renewed like t2←t1, P←0, Vc←0.

Then, the operation period of the no-pulse, i.e., the case of N = 0 will be described. During $P<PM$ like, for example, n3 (also, n5, n7), and when pulses exist in the previous operation period, one estimated value of the speed is calculated in accordance with the equation of

$$V = Vc + A \cdot TM \cdot (P + 1) \quad (3)$$

from the revolution speed Vc and the acceleration A calculated for the previous operation period. And another estimated value of the speed is calculated by the equation of

$$V = \frac{\alpha}{t0-t2} \quad (4)$$

as in the step S5 by the use of the lapse time T from the detection time t2 of the last pulse to the completion time t0 of the current operation period. The smaller one of the values obtained by both equations (3) and (4) is selected as the speed V of the current unit operation period. Unless Vc = 0, the program moves to the step S6 and the acceleration A is calculated in accordance with equation (2). When Vc = 0, A = 0 is applied. The data is renewed like P = P + 1. As the t1 does not exist, t2←t1 is not executed. Also, Vc←V is not executed because Vc should be a definite value when a pulse is detected.

When the previous operation period has no-pulses i.e. P ≠ 0 as in period n8 and its subsequence, the calculation is effected as in the above description. In this case, the detection time of the last pulse signal which is detected at the period before the previous period or even further before is used as the time t2.

When N = 0 is satisfied, but P<PM is not satisfied, it is assumed that rotary member 11 is at a standstill because the no-pulse periods have continued longer than PM. The estimated value of the speed, and the acceleration are made all 0, V = 0 at step S7, A = 0 at step S8, with the data being renewed like P←PM, Vc←0.

The curve 33 of Fig. 2 shows a revolution speed curve to be obtained from the operation described above, wherein the 0 mark is a calculated speed by equation (1), the Δ mark is an estimated value of the speed by equation (3), the X mark is an estimated value of the speed by equation (4). It can be seen that the smaller value of these two estimations is always a better approximation of the actual revolution speed.

As is clear from the foregoing description, according to the embodiment of the present invention, in the first and second inventions, the revolution speed for the period when the pulse signals have not been detected is determined by selecting the smaller value of the two estimated values, one estimated value obtained from the revolution speed and the acceleration calculated for the previous unit operation period, and another estimated value obtained by the use of the lapse time from the detection time of the last pulse signal to the completion time of the current unit operation period assuming that the number of pulses is 1.

Also, in the third and fourth inventions, in the case where a pulse signal has been detected after the no-pulse period, the revolution speed and the acceleration of the current unit operation period are calculated by the use of the lapse time from the detection time of the last pulse signal to the detection time of the pulse signal of this period.

Even in any invention, estimation errors are not added one after another, even when the pulse interval becomes wider and the non-pulse period continues, so that the difference between the estimated values for non-pulse periods and the measured value for the pulsed period becomes smaller. The revolution speed curve thus obtained becomes smoother and also closer to the actual speed curve as compared with the prior art, which is applicable advantageously to various controls of the rotary member or others. It can be also applied to either the deceleration or the acceleration phases.

Although the present invention has been fully described in connection with a preferred embodiment thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A method of measuring revolution speed comprising the steps of detecting pulse signals generated at an interval in inverse proportion to the revolution speed of a rotary member (11), calculating the revolution speed of the rotary member (11) for each unit operation period from the number of pulses within a fixed unit operation period, the lapse time between the leading pulse of current unit operation period and the leading pulse of previous operation period or between the final pulses of each operation periods, whereby for the case when pulse signals have not been detected in a previous unit operation period or a plurality of continuous unit operation periods but the pulse signals are detected in the current unit operation period following such no-pulse unit operation periods,

a) calculating revolution speed for said current unit operation period by the use of the lapsed time from the detection time of the last pulse signal to the detection time of the pulse signal in the current unit operation period,

**characterized by,**

b) calculating the acceleration for the current unit operation period by the use of the revolution speed for the operation in the current unit operation period, the revolution speed calculated for the unit operation period in which the last pulse signal has been detected, and the lapse time between these periods,

and for the case when no pulse signal is detected within a certain unit operation period,

c) obtaining both a first estimated value of the revolution speed for the current unit operation period from the revolution speed and the acceleration calculated for the previous unit operation period in which a pulse was detected provided the number of previous unit operation periods without a pulse is less than a predetermined value and a second estimated value assuming that one pulse occurs in the current unit operation period by employing the lapsed time which is a time from the detection time of the last pulse signal to the completion time of the current unit operation period, and

d) selecting the smaller value of the above two estimated values to be designated as the revolution speed for the current unit operation period.

2. An apparatus for measuring revolution speed comprising a pulse generating means (11,13) for generating pulse signals at an interval in inverse proportion to the revolution speed of a revolution member (11), an operation means (1) for detecting pulse signals from the pulse generating means (11,13), calculating the revolution speed of the rotary member (11) for each unit operation period from the pulse number within a unit operation period and the lapse time between the leading pulse of the unit operation period and that of previous unit operation period or between each final pulse thereof, whereby for the case when pulse signals are detected in the next current unit operation period following no-pulse unit operation periods, said operation means (2),

a) calculates the revolution speed for the current unit operation period by the use of the lapse time from the detecting time of the last pulse signal to the detection time of the pulse signal in the current unit operation period,

**characterized by:**

b) said operation means (2) calculating the acceleration for the current unit operation period by the use of the revolution speed for the current unit operation period, the revolution speed calculated for the unit operation period in which the last pulse signal has been detected, and the lapse time between these periods,

and for the case when no pulses are detected within a certain unit operation period, said operation means (2)

c) obtains one estimated value of the revolution speed for the current unit operation period from the revolution speed and the acceleration calculated for the previous unit operation period in which a pulse was detected;

d) obtains another estimated value of the revolution speed by assuming that the pulse number be 1 in the current unit operation period by using the lapsed time from the detection time of the last pulse signal to the completion time of the current unit operation period, and

e) adopts the smaller one through the comparison of these two estimated values as the revolution speed for the current unit operation period.

## Patentansprüche

1. Verfahren zum Messen von Umdrehungsgeschwindigkeit umfassend die folgenden Schritte: Erfassen von in einem Intervall umgekehrt proportional zur Umdrehungsgeschwindigkeit eines Drehelementes (11) erzeugten Impulssignalen, Berechnen der Umdrehungsgeschwindigkeit des Drehelementes (11) für jede Einheits-Betriebsperiode aus der Anzahl von Impulsen innerhalb einer festen Einheits-Betriebsperiode, der Ablaufzeit zwischen dem führenden Impuls der gegenwärtigen Einheits-Betriebsperiode und dem führenden Impuls der vorausgegangenen Betriebsperiode oder zwischen den letzten Impulsen von jeden Betriebsperioden, wodurch für den Fall, wenn Impulssignale in einer vorausgegangenen Einheits-Betriebsperiode oder in einer Vielzahl von kontinuierlichen Einheits-Betriebsperioden nicht erfaßt worden sind, aber die Impulssignale in der gegenwärtigen Einheits-Betriebsperiode, die derartigen Betriebsperioden mit keinem Impuls folgt, erfaßt werden,

a) die Umdrehungsgeschwindigkeit für die gegenwärtige Einheits-Betriebsperiode unter Verwendung der abgelaufenen Zeit von dem Erfassungszeitpunkt des letzten Impulssignales bis zum Erfassungszeitpunkt des Impulssignales in der gegenwärtigen Einheits-Betriebsperiode berechnet wird,

**gekennzeichnet durch** die folgenden Schritte

b) Berechnen der Beschleunigung für die gegenwärtige Einheits-Betriebsperiode unter Verwendung der Umdrehungsgeschwindigkeit für den Betrieb in der gegenwärtigen Einheits-Betriebsperiode, der für die Einheits-Betriebsperiode berechneten Umdrehungsgeschwindigkeit, in der das letzte Impulssignal erfaßt worden ist, und der Ablaufzeit zwischen diesen Perioden,

und für den Fall, wenn kein Impulssignal innerhalb einer gewissen Einheits-Betriebsperiode erfaßt wird,

c) Erhalten eines ersten geschätzten Wertes der Umdrehungsgeschwindigkeit für die gegenwärtige Einheits-Betriebsperiode aus der Umdrehungsgeschwindigkeit und der Beschleunigung berechnet für die vorausgegangene Einheits-Betriebsperiode, in der ein Impuls erfaßt wurde, vorrausgesetzt, daß die Anzahl von vorausgegangenen Einheits-Betriebsperioden ohne einen Impuls kleiner ist als ein vorgegebener Wert, und eines zweiten geschätzten Wertes unter der Annehme, daß ein Impuls in der gegenwärtigen Einheits-Betriebsperiode auftritt unter Verwendung der abgelaufenen Zeit, die eine Zeit von dem Erfassungszeitpunkt des letzten Impulssignals bis zum Endzeitpunkt der gegenwärtigen Einheits-Betriebsperiode ist, und

d) Auswählen des kleineren Wertes der obigen zwei geschätzten Werte, der als die Umdrehungsgeschwindigkeit für die gegenwärtige Einheits-Betriebsperiode bezeichnet werden soll.

2. Vorrichtung zum Messen von Umdrehungsgeschwindigkeit, umfassend: eine Impulserzeugungseinrichtung (12, 13) zum Erzeugen von Impulssignalen in einem Intervall umgekehrt proportional zu der Umdrehungsgeschwindigkeit des Drehelements (11), eine Operationseinrichtung (2) zum Erfassen von Impulssignalen von der Impulserzeugungseinrichtung (12, 13), die die Umdrehungsgeschwindigkeit des Drehelementes (11) für jede Einheits-Betriebsperiode aus der Impulsanzahl innerhalb einer Einheits-Betriebsperiode und der Ablaufzeit zwischen dem führenden Impuls der Einheits-Betriebsperiode und demjenigen der vorausgegangenen Einheits-Betriebsperiode oder zwischen jeden Endimpulsen davon berechnet, wodurch für den Fall, wenn Impulssignale in der nächsten gegenwärtigen Einheits-Betriebsperiode, die der Einheits-Betriebsperioden mit keinem Impuls folgt, erfasst werden, die Operationseinrichtung (2)

a) die Umdrehungsgeschwindigkeit für die gegenwärtige Einheits-Betriebsperiode unter Verwendung der Ablaufzeit von dem Erfassungszeitpunkt des letzten Impulssignales bis zum Erfassungszeitpunkt des Impulssignals in der gegenwärtigen Einheits-Betriebsperiode berechnet,

**dadurch gekennzeichnet,** daß

b) die Operationseinrichtung (2) die Beschleunigung für die gegenwärtige Einheits-Betriebsperiode unter Verwendung der Umdrehungsgeschwindigkeit für die gegenwärtige Einheits-Betriebsperiode, der für die Einheits-Betriebsperiode berechneten Umdrehungsgeschwindigkeit, in der das letzte Impulssignal erfaßt worden ist, und der Ablaufzeit zwischen diesen perioden berechnet, und

für den Fall, wenn keine Impulse innerhalb einer gewissen Einheits-Betriebsperiode erfaßt werden, die Operationseinrichtung (2)

c) einen geschätzten Wert der Umdrehungsgeschwindigkeit für die gegenwärtige Einheits-Betriebsperiode aus der Umdrehungsgeschwindigkeit und der Beschleunigung berechnet für die vorangegangene Einheits-Betriebsperiode, in der ein Impuls erfaßt worden ist, erhält;

d) einen anderen geschätzten Wert der Umdrehungsgeschwindigkeit erhält unter der Annahme, daß in der gegenwärtigen Einheits-Betriebsperiode die Impulsanzahl 1 ist unter Verwendung der abgelaufenen Zeit von dem Erfassungszeitpunkt des letzten Impulssignals bis zum Endzeitpunkt der gegenwärtigen Einheits-Betriebsperiode; und

e) durch den Vergleich dieser zwei geschätzten Werte den kleineren als die Umdrehungsgeschwindigkeit für die gegenwärtige Einheits-Betriebsperiode annimmt.

## Revendications

1. Procédé de mesure de vitesse de rotation comprenant la détection de signaux impulsionnels engendrés à intervalles en proportion inverse de la vitesse de rotation d'un organe rotatif (11), le calcul de la vitesse de rotation de l'organe rotatif (11) pendant chaque période unitaire de fonctionnement à partir du nombre d'impulsions apparaissant dans les limites d'une période unitaire déterminée de fonctionnement et du temps écoulé entre l'impulsion avant de la période unitaire actuelle de fonctionnement et l'impulsion avant de la période antérieure de fonctionnement ou entre les impulsions finales de chacune des périodes de fonctionnement, et, dans le cas où des signaux impulsionnels n'ont pas été détectés au cours de la période unitaire antérieure de fonctionnement ou d'une pluralité de périodes unitaires continues de fonctionnement mais que les signaux impulsionnels ont été détectés au cours de la période unitaire actuelle de fonctionnement après ces périodes unitaires de fonctionnement sans impulsions,

a) le calcul de la vitesse de rotation pendant ladite période unitaire actuelle de fonctionnement par utilisation du temps écoulé depuis le moment de détection du dernier signal impulsionnel jusqu'au moment de détection du signal impulsionnel au cours de la période unitaire actuelle de fonctionnement,

**caractérisé par,**

b) le calcul de l'accélération pendant la période unitaire actuelle de fonctionnement en utilisant la vitesse de rotation pendant le fonctionnement au cours de la période unitaire actuelle de fonctionnement, la vitesse de rotation calculée pendant la période unitaire de fonctionnement au cours de laquelle le dernier signal impulsionnel a été détecté, et le temps écoulé entre ces périodes,

et, dans le cas où aucun signal impulsionnel n'a été détecté dans les limites d'une certaine période unitaire de fonctionnement,

c) l'obtention d'une première valeur estimée de la vitesse de rotation pendant la période unitaire actuelle de fonctionnement à partir de la vitesse de rotation et de l'accélération calculée pendant la période unitaire antérieure de fonctionnement au cours de laquelle l'impulsion a été détectée pourvu que le nombre de périodes unitaires antérieures de fonctionnement sans une impulsion soit inférieur à une valeur prédéterminée ainsi que d'une seconde valeur estimée en supposant qu'une impulsion apparaîsse au cours de la période unitaire actuelle de fonctionnement par utilisation du temps écoulé qui est le temps allant du moment de détection du dernier signal impulsionnel jusqu'au moment d'achèvement de la période unitaire actuelle de fonctionnement, et

d) la sélection de la plus faible valeur qui, parmi les deux valeurs estimées mentionnées ci-dessus, doit être désignée comme étant la vitesse de rotation pendant la période unitaire actuelle de fonctionnement.

2. Appareil pour mesurer une vitesse de rotation comprenant un moyen (12, 13) de génération d'impulsions pour engendrer des signaux impulsionnels à intervalles en proportion inverse de la vitesse de rotation d'un organe rotatif (11), un moyen (2) d'exécution d'opération pour détecter les signaux impulsionnels en provenance du moyen (12, 13) générateur d'impulsions, calculer la vitesse de rotation de l'organe rotatif (11) pour chaque période unitaire de fonctionnement à partir du nombre d'impulsions apparaissant dans les limites d'une période unitaire de fonctionnement et du temps écoulé entre l'impulsion avant de la période unitaire de fonctionnement et celle de la période unitaire antérieure de fonctionnement ou entre chaque impulsion finale de ces périodes, grâce à quoi, dans le cas où les signaux impulsionnels sont détectés au cours de la période unitaire actuelle suivante de fonctionnement venant à la suite des périodes unitaires de fonctionnement sans impulsions, ledit moyen (2) d'exécution d'opération,

a) calcule la vitesse de rotation pendant la période unitaire actuelle de fonctionnement en utilisant le temps écoulé depuis le moment de détection du dernier signal impulsionnel jusqu'au moment de détection du signal impulsionnel au cours de la période unitaire actuelle de fonctionnement,

**caractérisé par :**

b) ledit moyen (2) d'exécution d'opération calcule l'accélération pendant la période unitaire actuelle de fonctionnement en utilisant la vitesse de rotation pendant la période unitaire actuelle de fonctionnement, la vitesse de rotation calculée pendant la période unitaire de fonctionnement au cours de laquelle le dernier signal impulsionnel a été détecté, et le temps écoulé entre ces périodes,

et, dans le cas où aucune impulsion n'a été détectée dans les limites d'une certaine période unitaire de fonctionnement, ledit moyen (2) d'exécution d'opération

c) obtient une valeur estimée de la vitesse de rotation pendant la période unitaire actuelle de fonctionnement à partir de la vitesse de rotation et de l'accélération calculées pendant la période unitaire antérieure de fonctionnement au cours de laquelle une impulsion a été détectée ;

d) obtient une autre valeur estimée de vitesse de rotation en supposant que le nombre d'impulsions soit 1 au cours de la période unitaire actuelle de fonctionnement en utilisant le temps écoulé depuis le moment de détection du dernier signal impulsionnel jusqu'au moment d'achèvement de la période unitaire actuelle de fonctionnement, et

e) adopte la plus petite des deux valeurs estimées, en comparant ces deux valeurs estimées, comme étant la vitesse de rotation pendant la période unitaire actuelle de fonctionnement.

Fig. 1

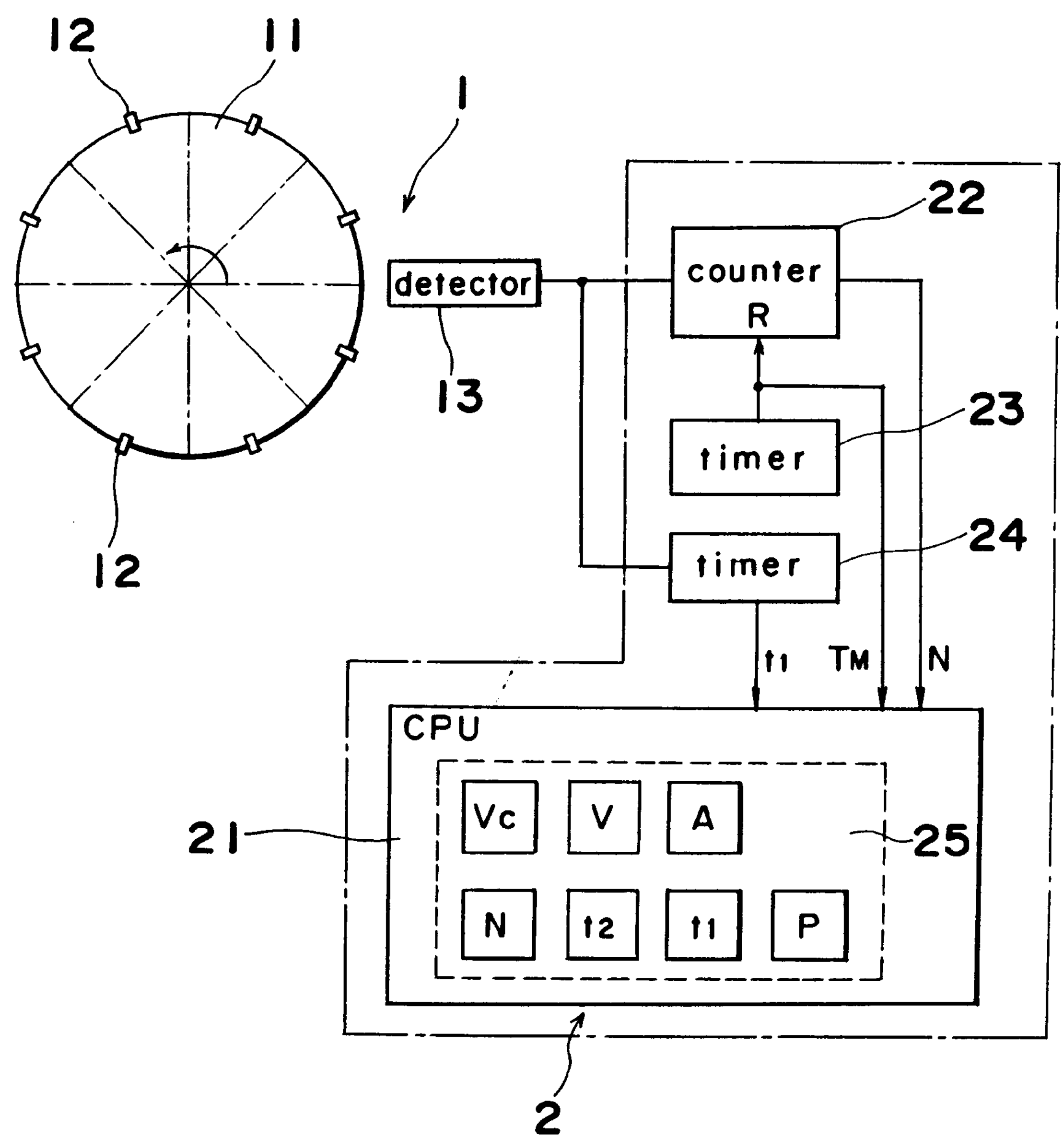
12
11
1
22
counter
R
detector
13
23
timer
24
timer
12
t1
TM
N
CPU
Vc
V
A
21
25
N
t2
t1
P
2

Fig. 4

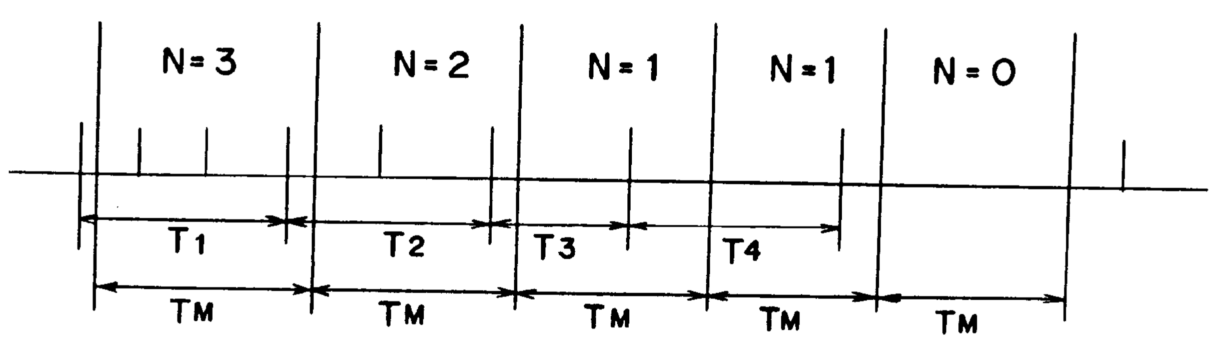
N=3
N=2
N=1
N=1
N=0
T1
T2
T3
T4
TM
TM
TM
TM
TM

Fig. 2

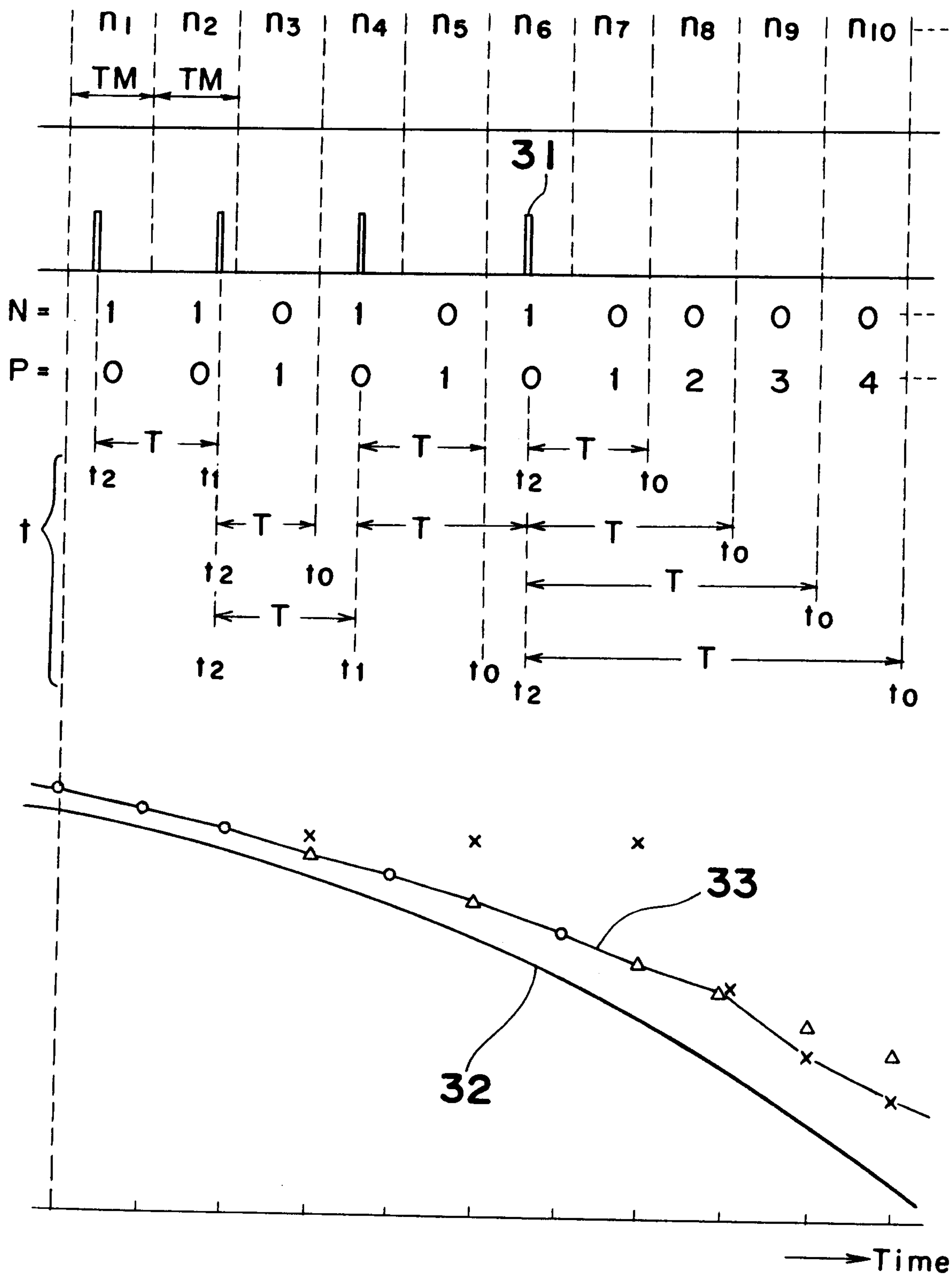
n1 n2 n3 n4 n5 n6 n7 n8 n9 n10
TM TM
31
N = 1 1 0 1 0 1 0 0 0 0
P = 0 0 1 0 1 0 1 2 3 4
T
t2 t1 t0
t
33
32
Time

Fig. 3

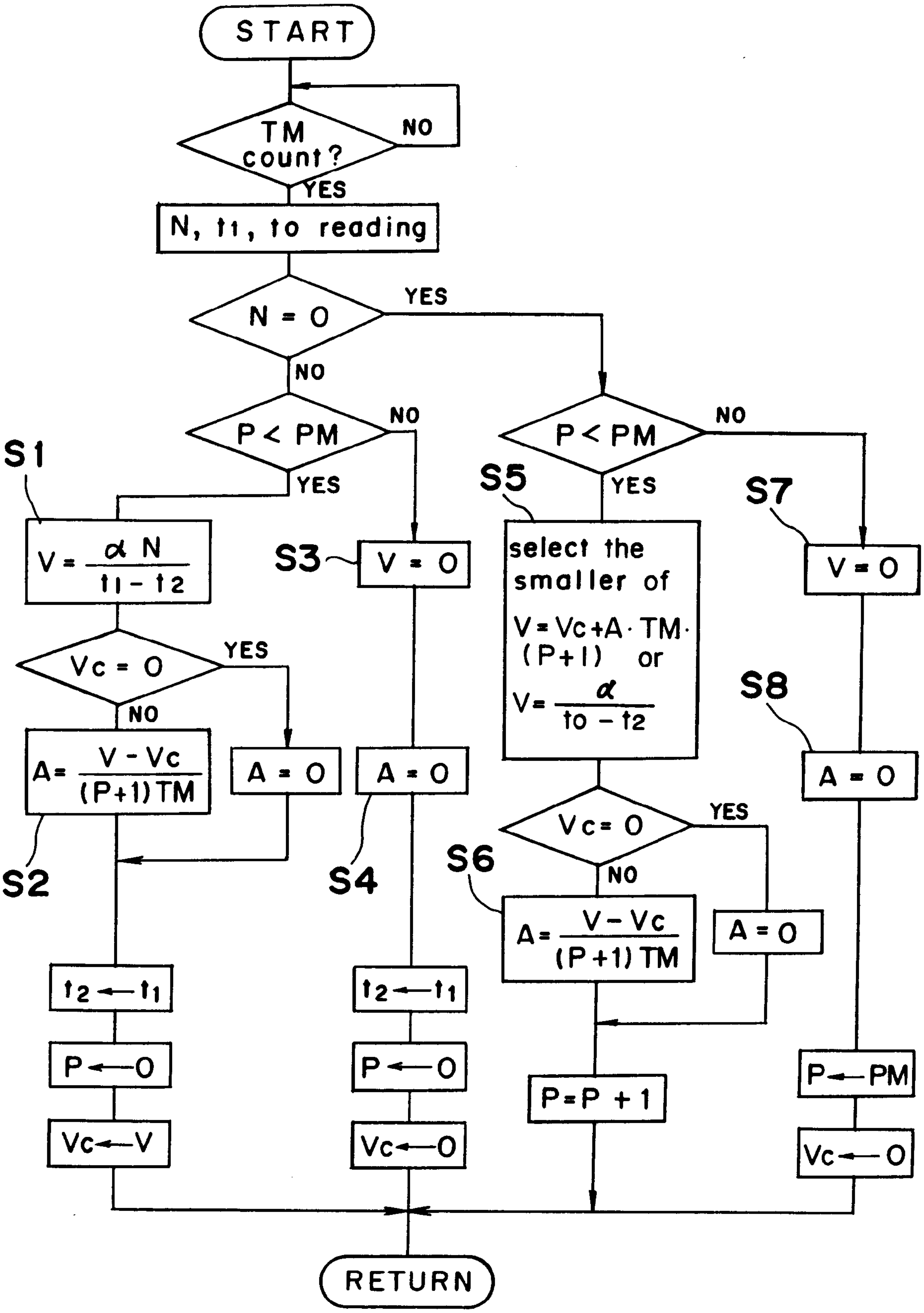
START
TM count?
NO
YES
N, t1, to reading
N = O
YES
NO
P < PM
NO
YES
S1
V = αN / (t1 - t2)
Vc = O
YES
NO
A = (V - Vc) / ((P+1)TM)
A = O
S2
t2 ← t1
P ← O
Vc ← V
S3
V = O
A = O
S4
t2 ← t1
P ← O
Vc ← O
P < PM
NO
YES
S5
select the smaller of
V = Vc+A · TM · (P+1) or
V = α / (to - t2)
Vc = O
YES
NO
S6
A = (V - Vc) / ((P+1) TM)
A = O
P = P + 1
S7
V = O
S8
A = O
P ← PM
Vc ← O
RETURN